# EUROPEAN PATENT APPLICATION

(11) **EP 1 536 256 A1**
(43) Date of publication of application: **01.06.2005**
(21) Application number: 04017183.7
(22) Date of filing: 21.07.2004
(51) Int. Cl.: G02B 6/18

(54) **Plastic optical fiber, plastic optical fiber preform and method for manufacturing preform**

(30) Priority: 27.11.2003 KR 2003084849
(71) Applicant: Samsung Electronics Co., Ltd., Suwon-si, Gyeonggi-do 442-742 (KR)
(72) Inventor: Oh, Sung-Koog, Yeongtong-gu Suwon-si Gyeonggi-do (KR); Lee, Jae-Ho, Yeongtong-gu Suwon-si Gyeonggi-do (KR); Lee, Seung-Hui, Yeongtong-gu Suwon-si Gyeonggi-do (KR)
(74) Representative: Lang, Johannes, Dipl.-Ing.

(57) **Abstract**

The present invention provides a plastic optical fiber, which enables the distributions of refractive indices to be adjusted easily, and a method for manufacturing a plastic optical fiber preform (100). The plastic optical fiber preform (100) includes a substrate (110) having one or more holes (111), and one or more materials (120) provided in the holes for a refractive index adjustment purpose. The distributions of refractive indices of the optical fiber preform are manipulated by adjusting the arrangement types, distributions, and the number of holes formed in the substrate and refractive indices of the materials used for refractive index adjustment. A graded-index profile may be obtained by inserting polymer rods into the substrate.

## Description

### CLAIM OF PRIORITY

This application claims priority to an application entitled "Plastic optical fiber, plastic optical fiber preform and method for manufacturing the preform," filed in the Korean Intellectual Property Office on November 27, 2003 and assigned Serial No. 2003-84849, the contents of which are hereby incorporated by reference.

### BACKGROUND OF THE INVENTION

### 1. Field of the Invention

The present invention relates to an optical fiber manufactured by drawing an optical fiber preform and, more particularly, to a plastic optical fiber that enables the distributions of refractive indices to be easily adjusted, a plastic optical fiber preform and a method for manufacturing the preform.

### 2. Description of the Related Art

Optical fibers used for communication may be classified into single-mode optical fibers and multi-mode optical fibers. Most optical fibers used for long distance and high-speed communication are step-index single-mode optical fibers employing a quartz glass as a basic material. A glass optical fiber has a diameter of about 125 µm and includes a core, a transmission area of an optical signal, typically having a diameter of only 8 to 10µm. Due to its size, it is very difficult and expensive to align and connect a glass optical fiber.

In contrast, a multi-mode glass optical fiber having a core diameter larger than the single-mode optical fiber can be used for short distance communication such as in a local area network (hereinafter referred to as an LAN). However, the cost of manufacturing the multi-mode glass optical fiber is high and the multi-mode glass optical fiber is fragile. As such, the multi-mode glass optical fiber is not widely used. Instead, metal lines such as twisted pairs or coaxial cables are frequently used in short distance communication having a range within 200 m. However, since the metal lines have a maximum information transmission speed or a transmission bandwidth of 150 Mbps, it cannot meet the recent asynchronous transfer mode (ATM) standard, which requires a transmission speed of 625 Mbps.

Accordingly, a focus has been shifted to develop an optical fiber made from a high molecule that can be used in short distance communication such as an LAN. For example, a plastic optical fiber has a diameter of 0.5 to 1.0 mm wider than the glass optical fiber, thus its alignment and connection are easy. Further, plastic connectors are made from a high molecule through an extrusion molding process and can be incorporated in the conventional alignment and connection methods. Therefore, it is anticipated that the plastic optical fiber can largely reduce the manufacturing cost.

Meanwhile, the plastic optical fiber has a step-index (hereinafter referred to as an SI) structure in which a refractive index varies in step form in a radial direction, and a graded-index (hereinafter referred to as a GI) in the refractive index gradually varies in the radial direction. Since the plastic optical fiber having the SI structure has a large modal dispersion, a signal cannot have a transmission speed faster than that of the metal lines. However, the high molecule optical fiber having the GI structure has a high information transmission speed due to a small modal dispersion effect, and the manufacturing cost can be reduced. Therefore, the high molecule optical fiber is very suitable for a communication medium of short distance and high speed.

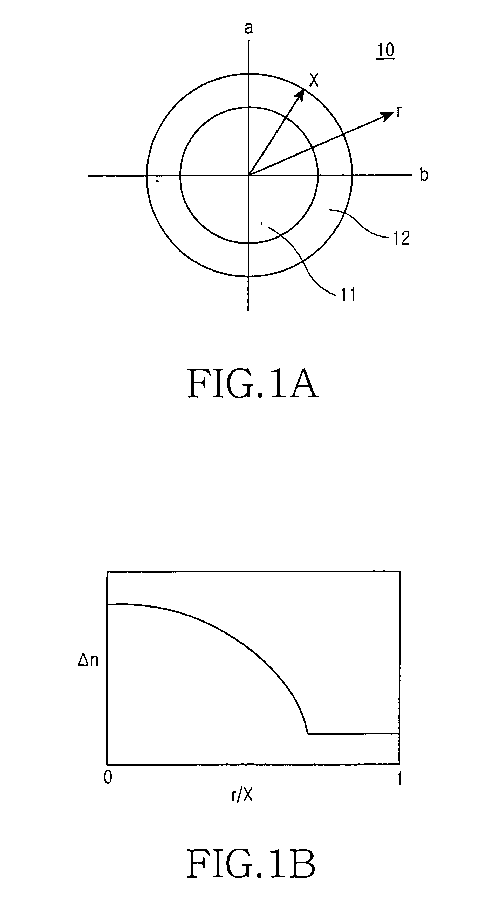

A conventional optical fiber having a general GI structure and a graph showing variation of refractive indices in the optical fiber are shown in FIGs. 1a and 1b. The optical fiber 10 includes a core 11 and a clad 12 surrounding the core 11 (see FIG. 1a), and a distribution of refractive indices in a direction "a" is the same as that of refractive indices in a direction "b" (see FIG. 1b). As shown, the distribution has the same refractive index at locations equally distanced from the center of the optical fiber regardless of circumferential positions.

A manufacturing process involving the conventional plastic optical fiber with the GI structure may be classified into two types as follows.

In the first process, a raw material of monomers or high molecule is injected into and polymerized in a rotating tube or reactor for manufacturing an optical fiber preform, while forming a clad having a constant refractive index in a central direction from the wall surface of the tube or reactor. In the same manner, a core material having a refractive index different from that of the clad is put into the tube or the reactor, thereby achieving a plastic optical fiber that has various distributions of refractive indices increasing or decreasing gradually from its periphery to a core center.

In the second process, which involves a continuous extrusion, a material having a constant refractive index, which will become a clad, and a material having a refractive index different from that of the clad, which will become a core, are continuously provided to the tube or the reactor, so that diffusion can occur in an interface area between the core and the clad during the extrusion, thereby achieving gradual variation in a refractive index.

However, during the polymerization process, it is not easy to selectively adjust the distributions of refractive indices for a desired distribution and to achieve distributions of refractive indices that continuously increase or decrease. Further, it is difficult to cause diffusion for changing refractive indices gradually in a short time during the actual extrusion. Therefore, it is difficult to manufacture an optical fiber which has distributions of refractive indices continuously increasing or decreasing from the clad to the core.

### SUMMARY OF THE INVENTION

Accordingly, the present invention has been made to solve the above-mentioned problems occurring in the prior art and provides additional advantages, by providing a plastic optical fiber capable of adjusting the distributions of effective refractive indices, a plastic optical fiber perform, and a method for manufacturing the preform.

In one embodiment, there is provided a plastic optical fiber preform comprising: a substrate having one or more holes, and one or more materials for refractive index adjustment, which are filled in the holes and are made from materials having refractive indices different from a refractive index of a material of constituting the substrate, wherein distributions of the refractive indices of the optical fiber preform are adjusted by arrangement types, distributions, and a number of holes formed in the substrate and refractive indices of the materials.

Preferably, the materials for refractive index adjustment are inserted into the holes.

More preferably, the plastic optical fiber perform has cross-sectional planes each including a center axis of the plastic optical fiber perform which have different distributions of refractive indices from each other.

In another embodiment, there is provided a method for manufacturing a plastic optical fiber perform comprising the steps of: a) forming a clad substrate having one or more holes and a constant refractive index; b) forming a waveguide of light by means of materials for refractive index adjustment which have refractive indices different from that of the clad substrate and are inserted into the holes; c) inserting the materials for refractive index adjustment into the clad substrate; and d) removing gaps between the clad substrate and the materials for refractive index adjustment, wherein distributions of the refractive indices of the optical fiber preform are adjusted by arrangement types, distributions, and a number of the holes formed in the clad substrate and refractive indices of the materials.

Preferably, the clad substrate is a base high molecule member having a constant refractive index polymerized from one or more monomers.

### BRIEF DESCRIPTION OF THE DRAWINGS

The above features and advantages of the present invention will be more apparent from the following detailed description taken in conjunction with the accompanying drawings, in which:
- FIG. 1a: is a cross-sectional view showing the structure of a conventional plastic optical fiber;
- FIG. 1b: is a graph showing the variation of refractive indices in FIG 1a;
- FIG. 2: is a cross-sectional view showing the structure of a plastic optical fiber preform according to one embodiment of the present invention;
- FIG. 3: is a graph showing the variation of refractive indices according to a direction "a" in FIG. 2;
- FIG 4: is a graph showing the variation of refractive indices according to a direction "d" in FIG 2;
- FIG. 5: is a cross-sectional view showing the structure of a plastic optical fiber preform according to another embodiment of the present invention;
- FIG 6: is a graph showing the variation of refractive indices according to a direction "a" in FIG. 5; and,
- FIG. 7: is a graph showing the variation of refractive indices according to a direction "d" in FIG. 5.

### DETAILED DESCRIPTION OF THE PREFERRED EMBODIMENT

Hereinafter, a preferred embodiment according to the present invention will be described with reference to the accompanying drawings. The same reference numerals are used to designate the same elements as those shown in other drawings. For the purposes of clarity and simplicity, a detailed description of known functions and configuration incorporated herein will be omitted as it may make the subject matter of the present invention unclear.

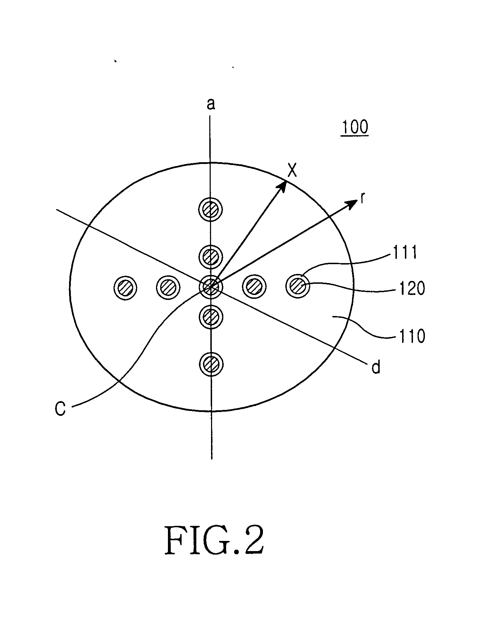

FIG 2 is a cross-sectional view illustrating the structure of a plastic optical fiber preform according to an embodiment of the present invention.

The plastic optical fiber preform 100 according to the embodiment of the present invention includes one or more independent holes 111 having circular or polygonal shapes, a base high molecule member 110 having a constant refractive index polymerized from one or more monomers, and one or more high molecule members 120 having refractive indices different from that of the base high molecule member 110, the high molecule member 120 being filled in the holes 111 for achieving the refractive index adjustment.

According to the teachings of the present invention, each hole 111 defines a core portion through which light can be guided, and distribution types, distributions, and the number of the holes 111 can be variously adjusted in order to achieve desired distributions of the effective refractive indices.

Each high molecule member 120, which is shaped like a rod, has a refractive index different from that of the base high molecule member 110 forming the clad, and is inserted into and filled in the hole 111, which is formed in the base high molecule member 110. Herein, the refractive index of the plastic optical fiber preform 100 can be selectively adjusted by changing the refractive index of each high molecule member 120. For instance, the refractive indices of the high molecule members 120 may gradually decrease in a direction from the center to a periphery of the preform 100, or may gradually increase in a direction from the center to a periphery of the preform 100, or may gradually decrease and then increase in a direction from the center to a periphery of the preform 100, or may gradually increase and then decrease in a direction from the center to a periphery of the preform 100.

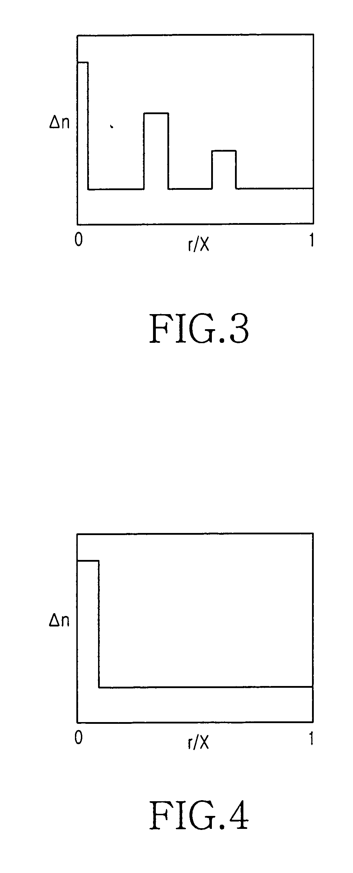

FIG 3 is a graph showing the variation of refractive indices according to a direction "a" in FIG. 2, and FIG 4 is a graph showing the variation of refractive indices according to a direction "d" in FIG 2. In FIGs. 3 and 4, a reference mark "X" represents the radius of the preform, a reference mark "c" represents the center of the preform, a reference mark "r" represents the distance from the center of the preform, and the reference mark "Δn" represents the variation of refractive indices.

As shown in FIGs. 3 and 4, distributions of the refractive indices in the direction "a" are not equal to those of the refractive indices in the direction "b". The distributions of the refractive indices vary according to the distributions of the holes formed in the base high molecule member 110 and the refractive indices of the high molecule members 120 inserted into the holes.

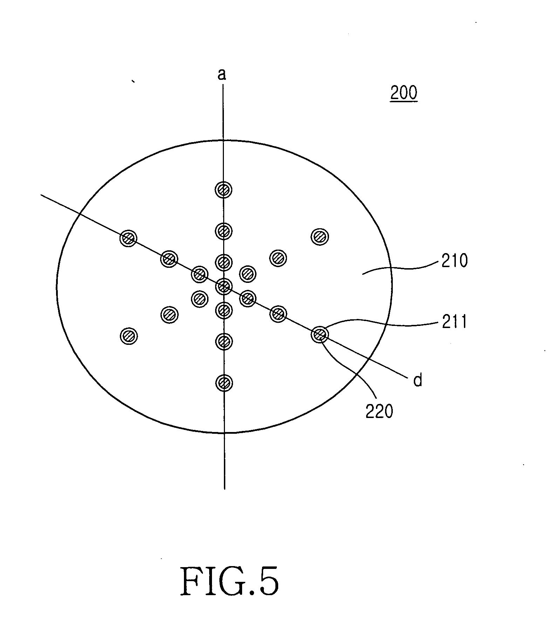

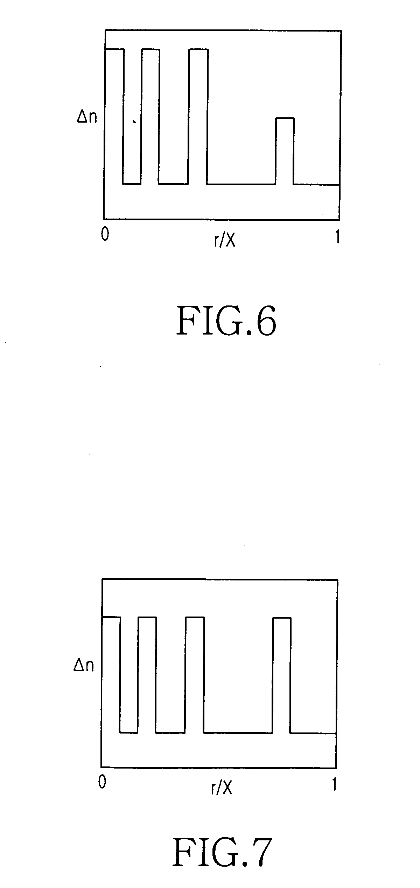

FIG 5 is a cross-sectional view showing a structure of a plastic optical fiber preform according to another embodiment of the present invention. FIG. 6 is a graph showing the variation of refractive indices according to a direction "a" in FIG 5, and FIG. 7 is a graph showing the variation of refractive indices according to a direction "d" in FIG. 5.

Referring to FIG 5, similarly to the embodiment shown in FIG. 2, the plastic optical fiber preform 200 includes one or more independent holes 211 having circular or polygonal shapes, a base high molecule member 210 having a constant refractive index, and one or more high molecule members 220 having refractive indices different from that of the base high molecule member 210, the high molecule members 220 being filled in the holes 211, having rod shapes, for achieving the refractive index adjustment.

As shown in FIGs. 6 and 7, distributions of the holes 211 gradually decrease in a direction going farther from the center "c" of the preform 200, and the inserted high molecule members 220 for the refractive index adjustment have refractive indices different from each other. In the previous embodiment in FIG 2, the holes 111 have a constant distribution regardless of the distance from the center of the preform 100, and the refractive indices of the high molecule members are different from each other.

Now, a manufacturing method of the plastic optical fiber preform 200 having the construction according to the present invention will be described.

First, each base high molecule member and each high molecule member used for refractive index adjustment are formed through a polymerization reactor and forming processes. The holes having circular or polygonal shapes are formed in the base high molecule member so that light can be guided therethrough, and the distribution and the distribution type of the holes are adjusted, as explained with reference to FIGs. 2-7, to achieve the predetermined distributions of effective refractive indices. The high molecule members for refractive index adjustment are formed in such a manner that they can be inserted into the holes each having a circular or polygonal shape formed in the base high molecule member. Further, the high molecule members for refractive index adjustment have refractive indices different from that of the base high molecule member. Note that the high molecule members for refractive index adjustment may have refractive indices different from each other.

Herein, table 1 shows suitable high molecule materials and their values for the refractive indices, and table 2 shows suitable materials used for refractive index adjustment and their refractive indices. Note that these materials shown in the table 1 and table 2 are for illustrative purposes; thus, they should not impose limitation on the scope of the invention.

**Table 1.**

| usable high molecule materials and refractive indices | |
|---|---|
| High molecule | Refractive index |
| Poly-2,2,2-tryfluoroethyl ethacrylate | 1.4200 |
| Poly methacrylate | 1.4920 |
| Poly-4-methylcyclohexyl methacrylate | 1.4975 |
| Polycyclohexyl methacrylate | 1.5066 |
| Polyfurfuryl methacrylate | 1.5381 |
| Poly-1-phenylrthyl methacrylate | 1.5487 |
| Poly-1-phenylcyclohexyl methacrylate | 1.5645 |
| Polybezyl methacrylate | 1.5680 |
| Polyphenyl methacrylate | 1.5706 |

**Table 2.**

| usable materials for refractive index adjustment (dopants) | |
|---|---|
| Materials for refractive index adjustment | Refractive index |
| Benzyl-n-butyl phthalate (BBP) | 1.5400 |
| Dibenzyl ether (DBE) | 1.5620 |
| Phenoxy toluene (PT) | 1.5730 |
| 1,1 bis-(3,4, dimethylphenyl) | 1.5640 |
| Diphenyl ether (DPS) | 1.5790 |
| Biphenyl (DP) | 1.5870 |
| Diphenyl sulfide (DPS) | 1.6330 |
| Diphenyl methane (DPM) | 1.5770 |
| 1-methoxyphenyl-1-phenylethane | 1.5710 |
| Benzyl benzoate | 1.5680 |
| Bromobenzene | 1.5570 |
| o-dichlorobenzene | 1.5510 |
| m- dichlorobenzene | 1.5430 |
| 1,2-dibromoethane | 1.5380 |
| 3-phenyl-1-propanol | 1.5320 |
| Benzyl methacrylate (BzMA) | 1.5670 |
| Dioctyl phthalate (DOP) | 1.4860 |

Next, the high molecule members use for refractive index adjustment are inserted into the base high molecule member and gaps, which may occur between the base high molecule member, and the high molecule members for refractive index adjustment are removed through an over-jacketing (OJ) or a drawing process.

In the present invention as described above, an effective refractive index can be adjusted according to the distribution types, the distributions, and the number of the holes, which are formed in the base high molecule member to form the clad, and the refractive indices of the high molecule members used for refractive index adjustment to form the core. Further, according to the present invention, an optical fiber, which has a superior transmission characteristic (i.e., an optical loss and optical non-linearity are very low), can be easily manufactured compared to the prior art, and an optical fiber having various optical characteristics can be achieved.

While the invention has been shown and described with reference to certain preferred embodiments thereof, it will be understood by those skilled in the art that various changes in form and details may be made therein without departing from the spirit and scope of the invention as defined by the appended claims.

## Claims

1. A plastic optical fiber preform comprising:
a substrate having one or more holes; and
one or more materials used for refractive index adjustment provided in the holes, the materials having refractive indices different from the substrate,
wherein distributions of refractive indices of the optical fiber preform are selectively adjusted by providing different arrangement and distributions of the number of holes formed in the substrate and by varying the refractive indices of the materials used for the refractive index adjustment.

2. The preform as claimed in claim 1, wherein the materials used for the refractive index adjustment are shaped in a rod form.

3. The preform as claimed in claim 2, wherein each rod has a cross-section shaped of a circle or a polygon.

4. The preform as claimed in claim 1, wherein the refractive indices of the materials used for the refractive index adjustment gradually decrease in a direction away from a center of the optical fiber preform.

5. The preform as claimed in claim 1, wherein the refractive indices of the materials used for the refractive index adjustment gradually increase in a direction away from a center of the optical fiber preform.

6. The preform as claimed in claim 1, wherein the refractive indices of the materials used for refractive index adjustment gradually decrease and then increase in a direction away from acenter of the optical fiber preform.

7. The preform as claimed in claim 1, wherein the refractive indices of the materials used for refractive index adjustment gradually increase and then decrease in a direction away from a center of the optical fiber preform.

8. The preform as claimed in claim 1, wherein the substrate is a base high molecule member having has a constant refractive index polymerized from one or more monomers.

9. The preform as claimed in claim 1, wherein the substrate has a cylinder shape.

10. A plastic optical fiber preform comprising:
a substrate having one or more holes; and
one or more materials used for refractive index adjustment and filled in some or all of the holes of the substrate, the materials having refractive indices different from the substrate,
wherein distributions of the refractive indices of the optical fiber preform are adjusted by manipulating arrangement and distributions of the number of holes formed in the substrate and varying the refractive indices of the materials used for refractive index adjustment.

11. The preform as claimed in claim 10, wherein the optical fiber preform has cross-sectional planes each including a center axis of the optical fiber preform, such that the distributions of the refractive indices along the center axis are different from each other.

12. The preform as claimed in claim 10, wherein the materials used for refractive index adjustment have a rod shape.

13. The preform as claimed in claim 10, wherein refractive indices of the materials used for the refractive index adjustment gradually decrease in a direction away from a center of the optical fiber preform.

14. The preform as claimed in claim 10, wherein the refractive indices of the materials used for the refractive index adjustment gradually increase in a direction away from a center of the optical fiber preform.

15. The preform as claimed in claim 10, wherein the refractive indices of the materials used for the refractive index adjustment gradually decrease and then increase in a direction away from a center of the optical fiber perform.

16. The preform as claimed in claim 11, wherein the refractive indices of the materials used for refractive index adjustment gradually increase and then decrease in a direction away from a center of the optical fiber preform.

17. A method for manufacturing a plastic optical fiber preform, the method comprising the steps of:
a) forming a clad substrate having one or more holes, the clad substrate having a constant refractive index;
b) forming a waveguide of light in the holes by means of materials used for refractive index adjustment, which have refractive indices different from that of the clad substrate; and,
c) removing gaps between the clad substrate and the materials used for the refractive index adjustment.

18. The method as claimed in claim 17, further comprising the step of manipulating distributions of the refractive indices of the optical fiber preform by selectively adjusting arrangement and distributions of the number of holes formed in the clad substrate and varying the refractive indices of the materials used for refractive index adjustment.

19. The method as claimed in claim 17, wherein the clad substrate is a base high molecule member having a constant refractive index polymerized from one or more monomers.

20. The method as claimed in claim 17, wherein the materials used for the refractive index adjustment have a rod shape.

21. The method as claimed in claim 17, wherein the gaps are removed through an over-jacketing (OJ) or a drawing process.
